(19) Europäisches Patentamt
European Patent Office
Office européen des brevets

(11) **EP 4 425 680 B1**

(12) **EUROPEAN PATENT SPECIFICATION**

(45) Date of publication and mention
of the grant of the patent:
**01.07.2026 Bulletin 2026/27**

(21) Application number: **24153077.3**

(22) Date of filing: **22.01.2024**

(51) International Patent Classification (IPC):
$H01M\ 50/446^{(2021.01)}$    $H01M\ 50/414^{(2021.01)}$
$H01M\ 50/426^{(2021.01)}$    $H01M\ 50/443^{(2021.01)}$
$H01M\ 50/451^{(2021.01)}$    $H01M\ 50/46^{(2021.01)}$
$H01M\ 50/489^{(2021.01)}$    $H01M\ 10/052^{(2010.01)}$

(52) Cooperative Patent Classification (CPC):
**H01M 50/443; H01M 50/414; H01M 50/426;
H01M 50/446; H01M 50/451; H01M 50/461;
H01M 50/489;** H01M 10/052; Y02E 60/10

(54) **A SPERATOR FOR AN ELECTROCHEMICAL DEVICE AND AN ELECTROCHEMICAL DEVICE COMPRISING THE SAME**

BELÜFTER FÜR EINE ELEKTROCHEMISCHE VORRICHTUNG UND ELEKTROCHEMISCHE VORRICHTUNG DAMIT

SPORÉRATEUR POUR UN DISPOSITIF ÉLECTROCHIMIQUE ET DISPOSITIF ÉLECTROCHIMIQUE LE COMPRENANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.02.2023 KR 20230026495
18.01.2024 KR 20240007842**

(43) Date of publication of application:
**04.09.2024 Bulletin 2024/36**

(73) Proprietor: **LG Energy Solution, Ltd.
Seoul 07335 (KR)**

(72) Inventors:
• **KIM, Kyung Tae
34122 Daejeon (KR)**
• **KWON, Su Jee
34122 Daejeon (KR)**
• **BAE, Won Sik
34122 Daejeon (KR)**

(74) Representative: **Goddar, Heinz J.
Boehmert & Boehmert
Anwaltspartnerschaft mbB
Pettenkoferstrasse 22
80336 München (DE)**

(56) References cited:
WO-A1-2022/045858    US-A1- 2018 315 971
US-A1- 2023 282 939

**Description**

## TECHNICAL FIELD

The present disclosure claims the benefit of the filing date of Korean Patent Application No. 10-2023-0026495, filed with the Korean Intellectual Property Office on February 28, 2023 and the benefit of the filing date of Korean Patent Application No. 10-2024-0007842, filed with the Korean Intellectual Property Office on January 18, 2024. The present disclosure relates to a separator for an electrochemical device and an electrochemical device including the same, and more specifically, to a separator for an electrochemical device which is capable of improving heat resistance by providing an adhesive layer including a polyvinyl acetate-based resin in a coating layer, and reducing the resistance of a battery.

## BACKGROUND

Among the components of an electrochemical device, a separator, which includes a polymer substrate having a porous structure located between a cathode and an anode, plays the roles of separating a cathode and an anode, preventing an electrical short circuit between the two electrodes, and allowing electrolytes and ions to pass therethrough. The separator itself does not participate in the electrochemical reaction, but physical properties such as wettability to electrolyte, degree of porosity, and thermal contraction rate affect the performance and safety of an electrochemical device.

Accordingly, in order to enhance the physical properties of the separator, various methods have been attempted to change the physical properties of a coating layer by adding a coating layer to the porous polymer substrate and adding various materials to the coating layer. For example, an inorganic material may be added to the coating layer to improve mechanical strength of the separator, or an inorganic material or hydrate may be added to the coating layer to improve flame retardancy and heat resistance of a polymer substrate. For example, an inorganic material may be added to the coating layer so as to improve mechanical strength of the separator, or an inorganic material or hydrate may be added to the coating layer so as to improve flame retardancy and heat resistance of the polymer substrate.

The separator may be attached to the electrodes through a lamination process, and a binder resin may be added to the slurry for the coating layer of the separator so as to secure adhesion between the electrodes and the separator.

Meanwhile, existing separators used in medium- and large-sized batteries, such as electric vehicle (EV) and energy storage system (ESS), implement adhesion by a coating method through humidified phase separation for lamination and stacking assembly processes. Due to this, a high content of poly(vinylidene fluoride-co-hexafluoropropylene) (PVdF-HFP) is required; however, the separator including a high content of PVdF-HFP had problems in that it has reduced heat resistance and that thinning of the separator is difficult because the particle size tends to increase in the slurry containing the binder and that it is difficult to secure the energy density. Additionally, in the case of an oil-based binder, there were problems in that since the electrolyte has solubility, when the binder is excessively dissolved in the electrolyte, it increases the viscosity of the electrolyte while decreasing the ionic conductivity, thereby increasing the resistance or deteriorating battery performance.

In the case of the separator including a high content of inorganic particles in the coating layer, it has excellent heat resistance due to a high content of inorganic materials and enables thinning of the separator. However, such separator including a coating layer with a high content of inorganic particles had a problem in that an adhesive layer does not exist on the surface, lamination is impossible in the assembly process of manufacturing batteries.

Therefore, there was a need for studying on a separator capable of reducing resistance and thinning while securing adhesion.

US 2018/315971 A1 discloses a separator having an electrode adhesive layer and an electrochemical device including the same. The electrode adhesive layer includes organic particles and an acrylic resin binder.

WO 2022/045858 A1 discloses an electrochemical device separator comprising a porous polymer substrate and an inorganic coating layer formed on the surface of at least one side of the porous polymer substrate, wherein the inorganic coating layer comprises inorganic particles and a binder resin, and the binder resin comprises a PVAc-type first binder resin and a PVDF-type second binder resin.

## SUMMARY

The above problems are solved in accordance with the subject-matter of the independent claims. Further embodiments result from the sub-claims and the following description.

An object of the present disclosure is to provide a separator for an electrochemical device overcoming drawbacks of the prior art, especially implementing the viscosity of an electrolyte in a battery at a low level, and improving the performance of the battery and thinning the separator; and an electrochemical device including the same. in which an adhesive layer containing a polyvinyl acetate-based resin is provided in a coating layer, the amount of a binder dissolved in the electrolyte is controlled. This may be achieved by adjusting the content of the polyvinyl acetate-based resin provided in the coating layer, and through these, implementing the viscosity of the electrolyte in the battery at a low level, while capable of improving the performance of the battery and thinning the separator; and an electrochemical device including the same.

However, the objects to be solved by the present disclosure are not limited to those mentioned objects, and other objects not mentioned will be clearly understood by those skilled in the art from the following description.

In a first embodiment of the present disclosure, there is provided a separator for an electrochemical device, which includes: a porous polymer substrate; a coating layer, wherein the coating layer is provided on at least one surface of the porous polymer substrate; and the coating layer comprises a first polymer binder and inorganic particles; and an adhesive layer, wherein the adhesive layer is provided on the coating layer; and the adhesive layer comprises a second polymer binder, wherein the second polymer binder comprises a polyvinyl acetate-based resin, wherein an amount of the second polymer binder per area of the adhesive layer is greater than 0 $g/m^2$ and less than 1.5 $g/m^2$, wherein an amount of the second polymer binder per area of the adhesive layer is greater than 0 $g/m^2$ and less than 1.5 $g/m^2$; the second polymer binder is in particulate form; the adhesive layer further comprises a third polymer binder, wherein the third polymer binder comprises a polyvinylidene-based binder; and the polyvinylidene-based binder is a copolymer of polyvinylidene fluoride and hexafluoropropylene. In this regard, the area is the area seen from a plane view on the separator, that is from a view perpendicular to the substrate, the coating layer and the adhesive layer.

According to a second embodiment of the present disclosure, in the first embodiment, the amount of the second polymer binder per area of the adhesive layer may be from 0.1 $g/m^2$ to 1.4 $g/m^2$.

According to a third embodiment of the present disclosure, in the second embodiment or in the third embodiment, the content of the inorganic particles in the coating layer may be 90 parts by weight or more based on 100 parts by weight of the coating layer.

According to a fourth embodiment of the present disclosure, in any of the first to the third embodiments, a weight ratio of the second polymer binder and the third polymer binder in the adhesive layer may be 99:1 to 50:50.

According to an fifth embodiment of the present disclosure, in any of the first to the fourth embodiments, the thickness of the coating layer may be greater than 0 and 2.0 $\mu$m or less.

According to a sixth embodiment of the present disclosure, in any of the first to the fifth embodiments, the resistance of the separator may be 0.8 $\Omega$ or less.

In a seventh embodiment of the present disclosure, there is provided an electrochemical device comprising a cathode, an anode, a separator, and an electrolyte, wherein the separator is interposed between the cathode and the anode, and is the separator is the separator for an electrochemical device according to any of the first to the sixth embodiments.

## ADVANTAGEOUS EFFECTS

The separator for an electrochemical device according to the present disclosure can improve the energy density of the battery by thinning the separator, and by providing an adhesive layer, the coating layer containing a high content of inorganic particles can realize adhesive strength in the process of manufacturing a battery.

The electrochemical device according to the present disclosure can maintain the viscosity of the electrolyte at a low level by adjusting the solubility of the polymer binder included in an adhesive layer in the electrolyte, and can maintain the surface resistance of a battery at a low level while improving the ionic conductivity of the battery.

## BRIEF DESCRIPTION OF THE DRAWINGS

Fig. 1 is a schematic diagram of a separator for an electrochemical device according to an embodiment of the present disclosure.

Fig. 2 is a schematic diagram of a separator for an electrochemical device according to an embodiment of the present disclosure.

Fig. 3 is a schematic diagram of a separator for an electrochemical device according to an embodiment of the present disclosure.

Fig. 4 is a schematic diagram of a separator for an electrochemical device according to an embodiment of the present disclosure.

Fig. 5 is a schematic diagram of an electrochemical device according to an embodiment of the present disclosure.

## DETAILED DESCRIPTION

Hereinafter, various embodiments of the present disclosure will be described in detail so that those ordinarily skilled in the art to which the present disclosure pertains can easily carry out the present disclosure. However, these are only examples given for illustrative purposes, and the scope of the present disclosure is not intended to be limited to the following contents.

Unless otherwise restricted, a detailed description defining or specifying the elements may be applied to all inventions, and is not limited to descriptions of particular inventions. That is, the present disclosure also refers to combinations of the embodiments even if they are disclosed separately.

Additionally, unless explicitly stated otherwise, a singular form includes a plural form throughout the detailed description and the appended claims.

As used herein, when a part "includes" a certain component, it means that it may further include other components, not excluding other components unless specifically otherwise stated. However, unless explicitly stated otherwise, "comprising" or "including" or the like includes "essentially comprising" and "consisting of".

The term "essentially comprises" as used herein has the meaning of "comprising at least 70 %", preferably of "comprising at least 80 %", most preferred of "comprising at least 90 %". If reference is made to the amount of a constituent in a mixture of material, % is wt %, relative to the total weight of the respective mixture. For example, a material essentially comprising polyethylene comprises the polyethylene in an amount of at least 70 wt% with respect to the total weight of the material.

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

As used herein, "A and/or B" means "A and B, or A or B".

As used herein, when it is described to be provided "on" a component, this means that other component(s) may be further disposed, intead of excluding that other component(s) are disposed therebetween, unless specifically otherwise stated. However, unless explicitly stated otherwise, "on" encompasses the meaning "directly on", that is, the situation in which no other component(s) may be further disposed therebetween.

As used herein, the characteristic of "having pores" means that a target object includes a plurality of pores and allows a gaseous and/or liquid fluid to pass through one side of the object and the other side by a structure connected to one another among the pores.

As used herein, the separator has a porous property including a number of pores, and it serves as a porous ion-conducting barrier that blocks the electrical contact between an anode and a cathode in an electrochemical device and allows ions to pass therethrough.

Hereinafter, the present disclosure will be described in more detail.

In an embodiment of the present disclosure, there is provided a separator for an electrochemical device 100. The separator 100 includes: a porous polymer substrate 110, a coating layer 130 and an andhesive layer150. The coating layer 130 is provided on, preferably directly on, at least one surface of the porous polymer substrate 110. and the coating layer includes, essentially comprises or consists of a first polymer binder 131 (not shown) and inorganic particles 133 (not shown).The adhesive layer 150 is provided on, preferably directly on, the coating layer 130. and the adhesive layer includes, essentially comprises or consists of a second polymer binder 151. The second polymer binder comprises, essentially comprises or consists of a polyvinyl acetate (PVAc)-based resin. The amount of the second polymer binder 151 per area of the adhesive layer 150 is greater than 0 $g/m^2$ and equal to or less than 1.5 $g/m^2$.

The separator for an electrochemical device 100 according to an embodiment of the present disclosure can be thinned so as to improve the energy density of a battery, and by providing an adhesive layer 150, the coating layer 130 containing a high content of inorganic particles can realize adhesive strength in the process of manufacturing a battery.

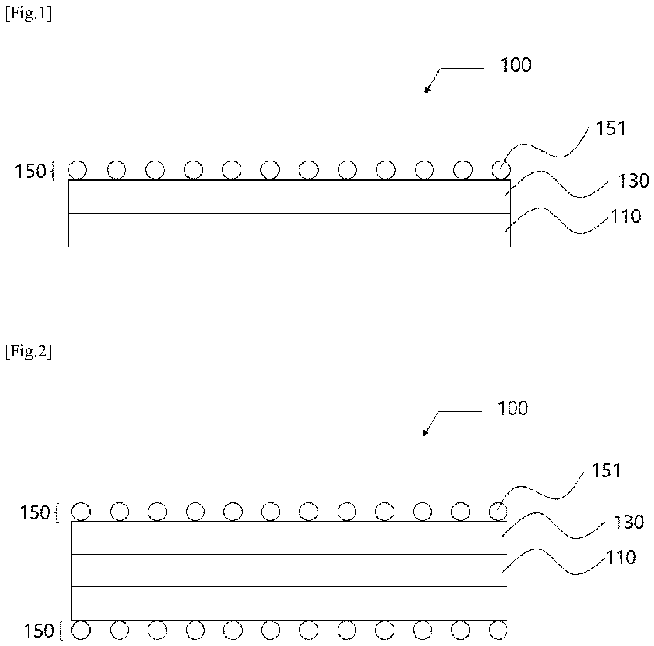

Fig. 1 is a schematic diagram of a separator for an electrochemical device 100 according to an embodiment of the present disclosure. Fig. 2 is a schematic diagram of a separator for an electrochemical device 100 according to an embodiment of the present disclosure. Specifically, Fig. 1 above is a schematic diagram of a separator for an electrochemical device 100 in which the coating layer 130 and the adhesive layer 150 are provided on one surface of the separator for an electrochemical device 100 . Fig. 2 is a schematic diagram of a separator for an electrochemical device 100 in which the coating layer 130 and the adhesive layer 150 are provided on each of the two surfaces of the separator for an electrochemical device 100. Referring to Figs. 1 and 2, a separator for an electrochemical device 100 according to an exemplary embodiment of the present disclosure will be described in detail.

According to an embodiment of the present disclosure, the separator for an electrochemical device 100 includes a porous polymer substrate 110. As described above, in the separator for an electrochemical device 100, the porous polymer substrate 110, allows lithium ions to pass therethrough while blocking an electrical contact and realize a shutdown function at an appropriate temperature.

According to an embodiment of the present disclosure, the porous polymer substrate 110 may be manufactured using a, that is, comprise, essentially comprise or concsist of, polyolefin-based resin as a base resin. The polyolefin-based resin may, for example, include, essentially comprise or consist of, polyethylene, polypropylene, polypentene, *etc.,* and may include, essentially comprise or concsist of, one or more of these. A porous *(i.e.,* having a plurality of pores) separator prepared using such a polyolefin-based resin as a base resin is advantageous from the aspect of imparting a shutdown function at an appropriate temperature.

According to an embodiment of the present disclosure, the weight average molecular weight of the polyolefin-based resin may be 500,000 or more and 1,500,000 or less. By adjusting the weight average molecular weight of the polyolefin-based resin within the above range, compression resistance of the separator may be improved. Furthermore, when different types of polyolefin-based resins are used by mixing or the separator is formed to have a multilayer structure made of different types of polyolefin-based resins, the weight average molecular weight of the polyolefin-based resin can be calculated by adding the weight average molecular weight according to the content ratio of each polyolefin-based resin.

As used herein, the "weight average molecular weight (Mw)" can be measured by gel permeation chromatography (GPC: PL GPC220, Agilent Technologies), and the measurement conditions can be set as follows.

- column: Polymer Laboratories (PL) Olexis

- solvent: trichlorobenzene (TCB)

- flow rate: 1.0 mL/min

- sample concentration: 1.0 mg/ml

- injection volume: 200 $\mu$L

- column temperature: 160°C

- detector: Agilent High Temperature RI detector

- standard: polystyrene (calibrate with a cubic function).

According to an embodiment of the present disclosure, the porous polymer substrate 110 may be prepared by a method (wet method), in which a polyolefin-based resin is kneaded with a diluent at a high temperature to make a single phase, the polyolefin resin and the diluent are subjected to phase separation in the cooling process and the diluent is extracted to form pores, and the resultant is subjected to stretching and heat-setting.

According to an embodiment of the present disclosure, the separator for an electrochemical device 100 can easily be prepared by those skilled in the art so that the average pore size and maximum pore size can meet the scope of the present disclosure by adjusting the mixing ratio of the diluent, stretching ratio, and temperature of heat-setting treatment, *etc.*

According to an embodiment of the present disclosure, the thickness of the porous polymer substrate 110 may be 1 $\mu$m or more and 50 $\mu$m or less. The thickness of the porous polymer substrate may be 2 $\mu$m or more, 3 $\mu$m or more, 4 $\mu$m or more, 5 $\mu$m or more, 6 $\mu$m or more, 7 $\mu$m or more, or 8 $\mu$m or more. The thickness of the porous polymer substrate may be 45 $\mu$m or less, 40 $\mu$m or less, 35 $\mu$m or less, 30 $\mu$m or less, 25 $\mu$m or less, 20 $\mu$m or less, or 15 $\mu$m or less. Specifically, the thickness of the porous polymer substrate may be 2 $\mu$m or more to 45 $\mu$m or less, 3 $\mu$m or more to 40 $\mu$m or less, 4 $\mu$m or more to 35 $\mu$m or less, 5 $\mu$m or more to 30 $\mu$m or less, 6 $\mu$m or more to 25 $\mu$m or less, 7 $\mu$m or more to 20 $\mu$m or less, or 8 $\mu$m or more to 15 $\mu$m or less. The energy density of the battery can be improved by adjusting the thickness of the porous polymer substrate within the above range.

According to an embodiment of the present disclosure, the porosity of the porous polymer substrate 110 may be 10 vol% or more and 90 vol% or less. The porosity of the porous polymer substrate may be 10 vol% or more, 20 vol% or more, 30 vol% or more, or 40 vol% or more. The porosity of the porous polymer substrate may be 90 vol% or less, 80 vol% or less, 70 vol% or less, or 60 vol% or less. Specifically, the porosity of the porous polymer substrate may be 10 vol% or more and 90 vol% or less, 20 vol% or more and 80 vol% or less, 30 vol% or more and 70 vol% or less, or 40 vol% or more and 60 vol% or less. The permeability of lithium ions through the separator can be controlled by adjusting the porosity of the porous polymer substrate within the above range.

According to the present disclosure, the porosity may correspond to a value obtained by subtracting the volume converted into the weight and density of each component of the porous polymer substrate 110 and/or the coating layer 130 from the volume calculated in the thickness, width, and length of the porous polymer substrate 110 and/or the coating layer 130.

According to the present disclosure, the porosity and pore size of the porous polymer substrate 110 and/or the coating layer 130 may be measured by the BET 6-point method by the nitrogen gas adsorption flow method using a scanning electron microscope (SEM) image, a mercury porosimeter, or a capillary flow porometer, or a porosimetry analyzer (Bell Japan Inc, Belsorp-II mini). At this time, it may be provided to use the capillary flow porometer.

According to an embodiment of the present disclosure, the separator for an electrochemical device 100 includes a coating layer 130 provided on, preferably directly on, at least one surface of the porous polymer substrate 110. Specifically, the separator for an electrochemical device 100 includes the coating layer 130 on preferably directly on, one side of the porous polymer substrate 110 as shown in Fig. 1, or includes the coating layer 130 provided on preferably directly on, both sides of the porous polymer substrate 110 as shown in Fig. 2. As described above, the separator for an electrochemical device 100, by including the coating layer 130 provided on at least one surface of the porous polymer substrate 110, can improve the heat resistance and mechanical properties of the separator and prevent an electrical short-circuit from occurring in the electrodes due to shrinkage of the separator at a high temperature.

According to an embodiment of the present disclosure, the separator for an electrochemical device 100 includes the coating layer 130, which includes, essentially comprises or consist of the first polymer binder 131 (not shown) and inorganic particles 133 (not shown). As described above, the coating layer 130, by including the first polymer binder 131 and the inorganic particles 133, can improve the heat resistance and mechanical properties of the separator and prevent an electrical short-circuit from occurring in the electrodes due to shrinkage of the separator at a high temperature, and form pores inside the coating layer.

According to an embodiment of the present disclosure, the coating layer 130 may include a plurality of pores. Specifically, the coating layer may be a porous coating layer. More specifically, the coating layer may be a porous coating layer including a plurality of pores therein. As described above, the coating layer 130, by including a plurality of pores, enables the flow of a current by allowing lithium ions to flow therethrough while physically blocking an anode and a cathode.

According to an embodiment of the present disclosure, the coating layer 130 may be formed such that inorganic particles 133 are attached to the first polymer binder 131 and accumulated within the coating layer. The pores inside the coating layer 130 may originate from an interstitial volume, which is an empty space between the inorganic particles 133.

According to an embodiment of the present disclosure, the first polymer binder 131 may be an acrylic binder, a polyvinylidene binder, or a combination thereof. The first polymer binder 131 may be an acrylic binder. As described above, by selecting the first polymer binder 131, it is possible to improve heat resistance of the coating layer and improve the adhesive strength of the inorganic particles within the coating layer.

According to an embodiment of the present disclosure, the acrylic binder included or essentially comprised in or forming the the first polymer binder 131 is a polymer containing a carboxylic acid ester as a repeating unit, and it may preferably be a (meth)acrylic acid ester or an acrylic-styrene copolymer.

According to an embodiment of the present disclosure, examples of the (meth)acrylic acid ester which may form or be comprised in the first polymer binder may be methyl (meth) acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl (meth)acrylate, ethylene di(meth)acrylate, *etc.,* and may be one or more selected among these. Among these, it is preferably one or more selected from methyl (meth) acrylate, ethyl (meth)acrylate, and 2-ethylhexyl (meth)acrylate, and particularly preferably methyl (meth)acrylate.

According to an embodiment of the present disclosure, the acrylic-styrene copolymer which may form or be comprised in the first polymer binder may an an acrylic binder, and the acrylic binder may be a polyacrylate-based binder. For example, the acrylic binder may be one or more selected from the group consisting of styrenebutadiene rubber, nitril-butadiene rubber, acrylonitrile-butadiene rubber, acrylonitrile-butadiene-styrene rubber, and an acrylate-based polymer, and specifically, may be a copolymer including acrylate.

According to an embodiment of the present disclosure, the polyvinylidene-based binder included in or forming the first polymer binder 131 is a polyvinylidene difluoride (PVdF)-based binder. As described above, by selecting the polyvinylidene-based binder as a polyvinylidene-based binder, it is possible to reduce the resistance of the separator.

According to an embodiment of the present disclosure, the first polymer binder 131 may be in particulate or liquid form. From the description above, by selecting the first polymer binder 131, it is possible to control the size of pores of the coating layer and improve the mechanical properties of the coating layer while controlling the porosity and air permeability of the coating layer.

According to an embodiment of the present disclosure, the polyvinylidene difluoride (PVdF)-based binder included in or forming the first polymer binder 131 may have the content of hexafluoropropylene (HFP) of 10 wt% or more. Specifically, the polyvinylidene-based binder included in the first polymer binder 131 may have the content of hexafluoropropylene (HFP) in the amount of 10 wt% or more and 80 wt% or less, 15 wt% or more and 75 wt% or less, 20 wt% or more and 70 wt% or less, 25 wt% or more and 65 wt% or less, 30 wt% or more and 60 wt% or less, 35 wt% or more and 55 wt% or less, or 40 wt% or more and 50 wt% or less. The resistance of the separator may be reduced by adjusting the content of hexafluoropropylene included in the polyvinylidene-based binder in the first polymer binder 131 within the above-described range. The content of HFP monomer in the polyvinylidene difluoride (PVdF)-based binder can be determined by $^1$H-NMR and/or $^{19}$F-NMR.

According to an embodiment of the present disclosure, the content of the first polymer binder 131 may be 10 parts by weight or less relative to 100 parts by weight of the coating layer. The content of the first polymer binder 131, relative to 100 parts by weight of the coating layer 130, may be greater than 0 parts by weight, 1 part by weight or more, 2 parts by weight or more, 3 parts by weight or more, or 4 parts by weight or more. The content of the first polymer binder 131, relative to 100 parts by weight of the coating layer 130, may be 9 parts by weight or less, 8 parts by weight or less, 7 parts by weight or less, or 6 parts by weight or less. Specifically, the content of the first polymer binder 131, relative to 100 parts by weight of the coating layer 130, may be greater than 0 parts by weight and equal to or less than 10 parts by weight, greater than 1 part by weight and equal to or less than 9 parts by weight, greater than 2 parts by weight and equal to or less than 8 parts by weight, greater than 3 parts by weight and equal to or less than 7 parts by weight, or greater than 4 parts by weight and equal to or less than 6 parts by weight. It is possible to improve mechanical properties of the coating layer 130, maintain the porosity of the coating layer, and improve heat resistance by adjusting the content of the first polymer binder 131 within the above range. The content of the first polymer binder in the coating layer can be determined from the amount of the first polymer binder in a composition, such as a slurry, used for preparing the coating layer.

According to an embodiment of the present disclosure, the average diameter ($D_{50}$) of the first polymer binder 131 is not particularly limited, but is preferably in the range of 0.1 $\mu$m or more and 1 $\mu$m or less in order to form the coating layer 130 with a uniform thickness and to have an appropriate porosity. The average diameter ($D_{50}$) of the first polymer binder 131 may be 0.2 $\mu$m or more, 0.3 $\mu$m or more, 0.4 $\mu$m or more, or 0.5 $\mu$m or more. The average diameter ($D_{50}$) of the first polymer binder 131 may be 0.9 $\mu$m or less, 0.8 $\mu$m or less, 0.7 $\mu$m or less, or 0.6 $\mu$m or less. Specifically, the average diameter ($D_{50}$) of the first polymer binder 131 may be 0.2 $\mu$m or more and 0.9 $\mu$m or less, 0.3 $\mu$m or more and 0.8 $\mu$m or less, 0.4 $\mu$m or more and 0.7 $\mu$m or less, or 0.5 $\mu$m or more and 0.6 $\mu$m or less. It is possible to improve the dispersibility in the slurry prepared for coating layer preparation and reduce the thickness of the coating layer to be formed by adjusting the average diameter ($D_{50}$) of the first polymer binder 131 within the above range. The "average particle diameter (D50)" means the diameter (particle diameter) at a point of 50 % in the particle number cumulative distribution depending on particle diameter. The average particle diameter may be determined by using a laser diffraction method. Specifically, a material to be determined is dispersed in a dispersion medium, and the resultant dispersion is introduced to a commercially available laser diffraction particle size analyzer (e.g., Microtrac S3500) to determine a difference in diffraction pattern depending on particle size, when particles pass through laser beams, thereby providing particle size distribution.

According to an embodiment of the present disclosure, the content of the inorganic particles 133 in the coating layer 130 may be 90 parts by weight or more based on 100 parts by weight of the coating layer 130. The content of the inorganic particles 133 in the coating layer, relative to 100 parts by weight of the coating layer 130, may be 90 parts by weight or more, 91 parts by weight or more, 92 parts by weight or more, 93 parts by weight or more, or 94 parts by weight or more. The content of the inorganic particles 133 in the coating layer, relative to 100 parts by weight of the coating layer 130, may be less than 100 parts by weight, 99 parts by weight or less, 98 parts by weight or less, 97 parts by weight or less, or 96 parts by weight or less. Specifically, the content of the inorganic particles 133 in the coating layer, relative to 100 parts by weight of the coating layer 130, may be 90 parts by weight or more and less than 100 parts by weight, 91 parts by weight or more and 99 parts by weight or less, 92 parts by weight or more and 98 parts by weight or less, 93 parts by weight or more and 97 parts by weight or less, or 94 parts by weight or more and 96 parts by weight or less. It is possible to improve the heat resistance and mechanical properties of the separator by adjusting the content of the inorganic particles 133 within the above range. The content of the inorganic particles in the coating layer can be determined from the amount of the inorganic particles in a composition, such as a slurry, used for preparing the coating layer.

According to an embodiment of the present disclosure, the inorganic particles 133 that can be used in the coating layer 130 are not particularly limited as long as they are electrochemically stable. That is, the inorganic particles that can be used in an embodiment of the present disclosure are not particularly limited as long as oxidation and/or reduction reactions do not occur in the range of an operating voltage (*e.g.,* 0 V to 5 V based on Li/Li$^+$) of an electrochemical device to which they are applied.

For example, when inorganic particles with high permittivity are used, the inorganic particles contribute to an increase in dissociation of an electrolyte salt, for example, a lithium salt in a liquid electrolyte, thereby improving the ionic conductivity of electrolyte solution. For the reasons described above, the inorganic particles may be inorganic particles having a dielectric constant greater than or equal to 5, inorganic particles having lithium-ion transport ability, or a mixture thereof.

According to an embodiment of the present disclosure, non-limiting examples of the inorganic particles 133 may include $BaTiO_3$, $Pb(Zr,Ti)O_3$ (PZT), $Pb_{1-x}La_xZr_{1-y}Ti_yO_3$ (PLZT, 0<x<1, 0<y<1), $Pb(Mg_{1/3}Nb_{2/3})O_3$-$PbTiO_3$(PMN-PT), hafnia ($HfO_2$), $SrTiO_3$, $SnO_2$, $CeO_2$, $MgO$, $Mg(OH)_2$, $NiO$, $CaO$, $ZnO$, $ZrO_2$, $SiO_2$, $Y_2O_3$, $Al_2O_3$, $SiC$, $Al(OH)_3$, $TiO_2$, aluminum peroxide, zinc tin hydroxide ($ZnSn(OH)_6$), tin-zinc oxide ($Zn_2SnO_4$, $ZnSnO_3$), antimony trioxide ($Sb_2O_3$),

antimony tetraoxide ($Sb_2O_4$), antimony pentoxide ($Sb_2O_5$), *etc.,* and may include one or more among these.

According to an embodiment of the present disclosure, the average diameter ($D_{50}$) of the inorganic particles 133 is not particularly limited, but it is preferably in the range of 0.3 $\mu$m or more and 1 $\mu$m, or less, for example from 0.5 to 0.7 $\mu$m, such as about 0.6 $\mu$m, in order to form a uniform thickness of the coating layer and an appropriate porosity. Specifically, when the particle size is less than 0.3 $\mu$m, the dispersibility of the inorganic particles in the slurry prepared for preparing the coating layer may deteriorate, and when the particle size exceeds 1 $\mu$m, the thickness of the formed coating layer may increase.

As used herein, "$D_{50}$ particle size" means the particle size at the 50% point of the cumulative distribution of the number of particles according to the particle size. The particle size can be measured using a laser diffraction method. Specifically, after dispersing the powder to be measured in a dispersion medium, the resultant is introduced into a commercially available laser diffraction particle size measuring device (*e.g.*, Microtrac S3500) to measure the difference in diffraction pattern according to the particle size when the particles pass through the laser beam to thereby calculate the particle size distribution. The $D_{50}$ particle size can be measured by calculating the particle size at the point where it becomes 50% of the cumulative distribution of the number of particles according to the particle size in the measuring device.

According to an embodiment of the present disclosure, the separator for an electrochemical device 100 includes an adhesive layer 150 provided on, preferably directly on, the coating layer 130. As described above, the separator for an electrochemical device 100, by including the adhesive layer 150 provided on the coating layer 130, can secure the adhesive strength between the electrodes and the separator in the process of lamination of the separator with the electrodes.

According to an embodiment of the present disclosure, the adhesive layer 150 includes, essentially comprises or consists of a second polymer binder 151 comprising, essentially comprising or consisting of a polyvinyl acetate-based resin. More specifically, the adhesive layer 150 may be, that is, may consist of polyvinyl acetate. As described above, the adhesive layer 150, by including a second polymer binder 151 in which a polyvinyl acetate-based resin is included, can obtain a dry adhesive strength with the electrodes.

According to an embodiment of the present disclosure, the amount of the second polymer binder 151 per area of the adhesive layer 150 is greater than 0 $g/m^2$ and equal to or less than 1.5 $g/m^2$. The amount of the second polymer binder 151 per area of the adhesive layer 150 may be 0.1 $g/m^2$ or more, 0.2 $g/m^2$ or more, 0.3 $g/m^2$ or more, 0.5 $g/m^2$ or more, 0.8 $g/m^2$ or more, or 0.9 $g/m^2$ or more. The amount of the second polymer binder 151 per area of the adhesive layer 150 may less 1.4 $g/m^2$ or less, 1.3 $g/m^2$ or less, 1.2 $g/m^2$ or less, 1.1 $g/m^2$ or less or 1.0 $g/m^2$. Specifically, the amount of the second polymer binder 151 per area of the adhesive layer 150 may be 0.1 $g/m^2$ or more and less than 1.5 $g/m^2$, 0.2 $g/m^2$ or more and 1.4 $g/m^2$ or less, 0.5 $g/m^2$ or more and 1.3 $g/m^2$ or less, 0.8 $g/m^2$ or more and 1.2 $g/m^2$ or less, or 0.9 $g/m^2$ or more and 1.1 $g/m^2$ or less. For example, the amount of the second polymer binder 151 per area of the adhesive layer 150 may be 0.2 $g/m^2$ or more and 1.0 $g/m^2$ or less. The viscosity of the electrolyte can be reduced by reducing the amount of the second polymer binder 151 dissolved by the electrolyte, by adjusting the content of the second polymer binder 151 per area of the adhesive layer 130 within the above range, and through this, the resistance of the separator can be reduced and the adhesive strength can be improved. The amount of the second polymer binder in the adhesive layer can be determined from the amount of the second polymer binder in a composition, such as a slurry, used for preparing the adhesive layer.

According to an embodiment of the present disclosure, the second polymer binder 151 is in particulate form, that is, may be formed of a variety of second polymer binder particles 151. As described above, the porosity of the separator is improved by selecting the second polymer binder 151 in particulate form.

According to an embodiment of the present disclosure, the average diameter ($D_{50}$) of the second polymer binder particles 151 is not particularly limited, but is preferably in the range of 0.1 $\mu$m or more and 1 $\mu$m or less in order to form the adhesive layer 150 with a uniform thickness and to have an appropriate porosity. The average diameter ($D_{50}$) of the second polymer binder 151 may be 0.2 $\mu$m or more, 0.3 $\mu$m or more, 0.4 $\mu$m or more, or 0.5 $\mu$m or more. The average diameter ($D_{50}$) of the second polymer binder 151 may be 0.9 $\mu$m or less, 0.8 $\mu$m or less, 0.7 $\mu$m or less, or 0.6 $\mu$m or less. Specifically, the average diameter ($D_{50}$) of the second polymer binder 151 may be 0.2 $\mu$m or more and 0.9 $\mu$m or less, 0.3 $\mu$m or more and 0.8 $\mu$m or less, 0.4 $\mu$m or more and 0.7 $\mu$m or less, or 0.5 $\mu$m or more and 0.6 $\mu$m or less. It is possible to improve the dispersibility in the slurry prepared for adhesive layer preparation and reduce the thickness of the adhesive layer to be formed by adjusting the average diameter ($D_{50}$) of the seconod polymer binder 151 within the above range. Specifically, after dispersing the powder to be measured in a dispersion medium, the resultant is introduced into a commercially available laser diffraction particle size measuring device (*e.g.*, Microtrac S3500) to measure the difference in diffraction pattern according to the particle size when the particles pass through the laser beam to thereby calculate the particle size distribution. The $D_{50}$ particle size can be measured by calculating the particle size at the point where it becomes 50% of the cumulative distribution of the number of particles according to the particle size in the measuring device.

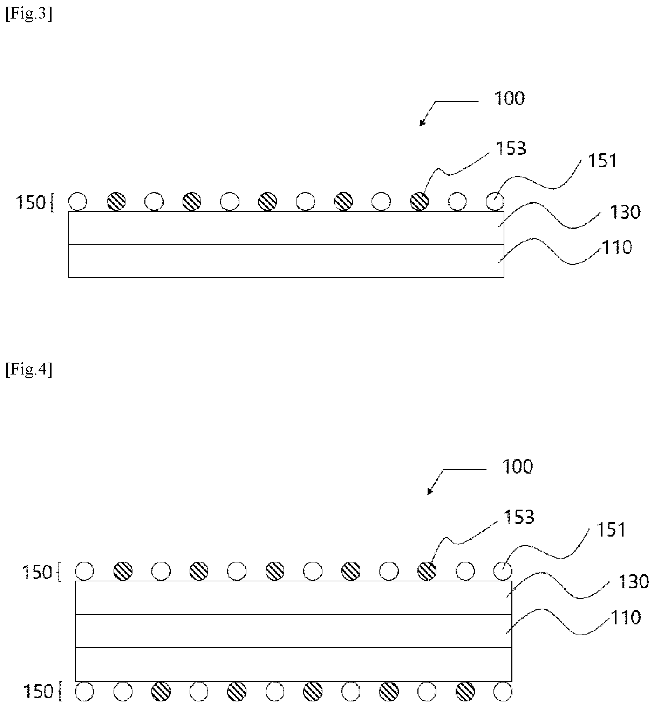

Fig. 3 is a schematic diagram of a separator 100 for an electrochemical device according to an embodiment of the present disclosure. Fig. 4 is a schematic diagram of a separator 100 for an electrochemical device according to an embodiment of the present disclosure. Specifically, Fig. 3 is a schematic diagram of a separator for an electrochemical device 100 provided with a coating layer 130 and an adhesive layer 150 on one surface thereof, wherein the adhesive layer 150 includes a third polymer binder 153. Fig. 4 is a schematic diagram of a separator for an electrochemical device 100 provided with a coating layer 130 and an adhesive layer 150 on both sides, respectively, in which the adhesive layer 150 includes a third polymer binder 153. Referring to Figs. 3 and 4, the separator for an electrochemical device 100 according to an exemplary embodiment of the present disclosure will be described in detail.

According to an embodiment of the present disclosure, the adhesive layer 150 further includes a third polymer binder 153 that includes, essentially comprises or consists of a polyvinylidene-based binder. As described above, by further including the third polymer binder 153 that includes, essentially comprises or consists of a polyvinylidene-based binder, it is possible to minimize the increase in resistance by electrolyte and improve wet adhesive strength.

According to an embodiment of the present disclosure, the polyvinylidene-based binder may have a content of hexafluoropropylene (HFP) of 40 wt% or less. The polyvinylidene-based binder may have the content of hexafluoropropylene of greater than 0 wt% or more, 5 wt% or more, 10 wt% or more, or 15 wt% or more. The polyvinylidene-based binder may have the content of hexafluoropropylene of 40 wt% or less, 35 wt% or less, 30 wt% or less, or 25 wt% or less. Specifically, the polyvinylidene-based binder may have the content of hexafluoropropylene to be in the range of greater than 0 wt% and equal to or less than 40 wt%, equal to or greater than 5 wt% and equal to or less than 35 wt%, equal to or greater than 10 wt% and equal to or less than 30 wt%, or equal to or greater than 15 wt% and equal to or less than 25 wt%. It is possible to improve the resistance of the separator by maintaining the porosity of the separator by adjusting the content of hexafluoropropylene included in the polyvinylidene-based binder within the above range.

According to an embodiment of the present disclosure, the polyvinylidene-based binder may be a polyvinylidene difluoride (PVdF)-based binder. As described above, by selecting the polyvinylidene-based binder as a polyvinylidene fluoride-based binder, such as a polyvinylidene difluoride (PVdF)-based binder, it is possible to maintain the porosity of the separator to thereby improve the resistance of the separator.

The polyvinylidene-based binder is a copolymer of polyvinylidene fluoride and hexafluoropropylene (poly(vinylidene fluoride-co-hexafluoropropylene; PVdF-co-HFP). As described above, it is possible to minimize the dissolution of the third polymer binder by electrolyte and improve wet adhesive strength by selecting the polyvinylidene-based binder as a copolymer of polyvinylidene fluoride and hexafluoropropylene.

The adhesive layer 150 may essentially comprise or consist of the second polymer binder 151 and the third polymer binder 153.

According to an embodiment of the present disclosure, in the adhesive layer 150, the weight ratio between the second polymer binder 151 and the third polymer binder 153 may be in the range of 99:1 to 50:50. Specifically, in the adhesive layer 150, the weight ratio between the second polymer binder 151 and the third polymer binder 153 may be in the rang of 95:5 to 55:45, 90:10 to 60:40, 85:15 to 65:35, or 80:20 to 70:30, such as about 70:30. It is possible to improve the dry adhesive strength while preventing the increase of resistance of the separator by the electrolyte by adjusting the weight ratio between the second polymer binder 151 and the third polymer binder 153 in the adhesive layer 150 within the above range.

As used herein, a dry adhesive strength may be measured in such a manner that a separator is cut into 70 mm (length) × 25 mm (width), the prepared anode and the separator are laminated using a press under conditions at 60°C, 6.5 MPa, and 1 sec to prepare a specimen, the prepared specimen is fixed to a glass plate by attaching using double-sided tape, at this time after disposing the anode to face the glass plate, the membrane portion of the specimen is peeled at an angle of 180° at a rate of 150 mm/min at 25°C, and the strength at this time is measured.

As used herein, a wet adhesive strength may be measured in such a manner that a separator is cut into 70 mm (length) × 25 mm (width), the prepared anode and the separator are laminated using a press under conditions at 60°C, 6.5 MPa, and 1 sec to prepare a specimen, the prepared specimen is loaded into a battery case along with the electrolyte and maintained for 4 hours to impregnate the specimen with the electrolyte (ethylene carbonate and ethyl methyl carbonate are mixed in a 7:3 volume ratio and prepared to 1 M concentration of $LiPF_6$), and then, the specimen is taken out of the case and is fixed to the glass plate by attaching using double-sided tape, at this time after disposing the anode to face the glass plate, the membrane portion of the specimen is peeled at an angle of 90° at a rate of 200 mm/min at 25°C, and the strength at this time is measured.

According to an embodiment of the present disclosure, the combined amount of the second polymer binder 151 and the third polymer binder 153 per area of the adhesive layer 150 may be greater than 0 $g/m^2$ and equal to or less than 1.5 $g/m^2$. The combined amount of the second polymer binder 151 and the third polymer binder 153 per area of the adhesive layer 150 may be 0.1 $g/m^2$ or more, 0.2 $g/m^2$ or more, 0.3 $g/m^2$ or more, 0.5 $g/m^2$ or more, 0.8 $g/m^2$ or more, or 0.9 $g/m^2$ or more. The combined amount of the second polymer binder 151 and the third polymer binder 153 per area of the adhesive layer 150 may less 1.4 $g/m^2$ or less, 1.3 $g/m^2$ or less, 1.2 $g/m^2$ or less, 1.1 $g/m^2$ or less or 1.0 $g/m^2$. Specifically, the combined amount of the second polymer binder 151 and the third polymer binder 153 per area of the adhesive layer 150 may be 0.1 $g/m^2$ or more and less than 1.5 $g/m^2$, 0.2 $g/m^2$ or more and 1.4 $g/m^2$ or less, 0.5 $g/m^2$ or more and 1.3 $g/m^2$ or less, 0.8 $g/m^2$ or more and 1.2 $g/m^2$ or less, or 0.9 $g/m^2$ or more and 1.1 $g/m^2$ or less. It is possible to reduce the viscosity of the electrolyte by reducing the amount of the second polymer binder dissolved by the electrolyte, and through this, the resistance of the separator can be reduced and the adhesive strength can be improved. The combined amount of the second polymer binder and the third polymer binder in the adhesive layer can be determined from the amount of the second polymer binder in a composition, such as a slurry, used for preparing the adhesive layer.

According to an embodiment of the present disclosure, the thickness of the coating layer 130 on either side of the porous polymer substrate 110 may be greater than 0 and 2.0 $\mu$m or less. The thickness of the coating layer 130 may be greater than 0 $\mu$m, 0.1 $\mu$m or more, 0.2 $\mu$m or more, 0.3 $\mu$m or more, 0.4 $\mu$m or more, 0.5 $\mu$m or more, 0.6 $\mu$m or more, 0.7 $\mu$m or more, 0.8 $\mu$m or more, 0.9 $\mu$m or more, 1.0 $\mu$m or more, 1.0 $\mu$m or more, 1.1 $\mu$m or more, 1.2 $\mu$m or more, 1.3 $\mu$m or more, or 1.4 $\mu$m or more. The thickness of the coating layer 130 may be equal to or less than 2.0 $\mu$m, equal to or less than 1.9 $\mu$m, equal to or less than 1.8 $\mu$m, equal to or less than 1.7 $\mu$m, or equal to or less than 1.6 $\mu$m. Specifically, the thickness of the coating layer 130 may be greater than 0 $\mu$m and equal to or less than 2.0 $\mu$m, 0.5 $\mu$m or more and equal to or less than 1.9 $\mu$m, 0.8 $\mu$m or more and equal to or less than 1.8 $\mu$m, 1.1 $\mu$m or more and equal to or less than 1.7 $\mu$m, 1.2 $\mu$m or more and equal to or less than 1.7 $\mu$m, 1.3 $\mu$m or more and equal to or less than 1.7 $\mu$m, 1.4 $\mu$m or more and equal to or less than 1.6 $\mu$m, such as about 1.5 $\mu$m. It is possible to improve the heat resistance of the separator and increase the energy density of the separator by adjusting the thickness of the coating layer 130 within the above range.

According to an embodiment of the present disclosure, the thickness of the adhesive layer 150 may be greater than 0 and 1.0 $\mu$m or less. The thickness of the coating layer 130 may be greater than 0 $\mu$m, 0.1 $\mu$m or more, 0.2 $\mu$m or more, 0.3 $\mu$m or more, or 0.4 $\mu$m or more. The thickness of the coating layer 130 may be equal to or less than 1.0 $\mu$m, equal to or less than 0.9 $\mu$m, equal to or less than 0.8 $\mu$m, equal to or less than 0.7 $\mu$m, or equal to or less than 0.6 $\mu$m. Specifically, the thickness of the coating layer 130 may be greater than 0 $\mu$m and equal to or less than 1.0 $\mu$m, 0.1 $\mu$m or more and equal to or less than 0.9 $\mu$m, 0.2 $\mu$m or more and equal to or less than 0.8 $\mu$m, 0.3 $\mu$m or more and equal to or less than 0.7 $\mu$m, 0.4 $\mu$m or more and equal to or less than 0.6 $\mu$m, suach as about 0.5 $\mu$m.

In an embodiment of the present disclosure, the thickness of the polymer substrate and/or the coating layer and/or the adhesive layer may be measured by applying a contact thickness meter. As the contact type thickness meter, for example, Mitutoyo's VL-50S-B may be used.

According to an embodiment of the present disclosure, the separator for an electrochemical device 100 may have a resistance of less than 0.85 $\Omega$. The separator for an electrochemical device may have a resistance greater than 0 $\Omega$, greater than 0.05 $\Omega$, greater than 0.10 $\Omega$, greater than 0.15 $\Omega$, greater than 0.20 $\Omega$, greater than 0.25 $\Omega$, greater than 0.30 $\Omega$, greater than 0.35 $\Omega$, or greater than 0.40 $\Omega$ and equal to or less than 0.50 $\Omega$. The separator for an electrochemical device may have a resistance less than 0.85 $\Omega$, equal to or less than 0.80 $\Omega$, equal to or less than 0.75 $\Omega$, equal to or less than 0.70 $\Omega$, equal to or less than 0.65 $\Omega$, equal to or less than 0.60 $\Omega$, equal to or less than 0.55 $\Omega$, or equal to or less than 0.50 $\Omega$. Specifically, the separator for an electrochemical device may have a resistance greater than 0 $\Omega$ and less than 0.85 $\Omega$, greater than 0.05 $\Omega$ and less than 0.85 $\Omega$, greater than 0.10 $\Omega$ and equal to or less than 0.80 $\Omega$, greater than 0.15 $\Omega$ and equal to or less than 0.75 $\Omega$, greater than 0.20 $\Omega$ and equal to or less than 0.70 $\Omega$, greater than 0.25 $\Omega$ and equal to or less than 0.65 $\Omega$, greater than 0.30 $\Omega$ and equal to or less than 0.60 $\Omega$, greater than 0.35 $\Omega$ and equal to or less than 0.55 $\Omega$, or greater than 0.40 $\Omega$ and equal to or less than 0.50 $\Omega$. It is possible to improve battery performance by adjusting the resistance of the separator for an electrochemical device within the above range.

As used herein, "resistance" may mean that a separator is interposed between the SUS, a coin cell is manufactured by injecting an electrolyte mixed with $LiPF_6$ at a concentration of 1 M into a non-aqueous solvent (in which ethylene carbonate (EC) and ethyl methyl carbonate (EMC) are mixed in a 3:7 ratio), and thereby the resistance (ER) is measured by the EIS method. In particular, the frequency may be in the range of 100,000 Hz to 10,000 Hz.

According to the embodiment of the present disclosure, the second polymer binder may be particle-type, solution-type and the combination thereof. In the present specification, "particle-type" may define that the second polymer binder keeps the particle phase by not being dissolved with an electrolyte inserted in a cell. In the present specification, "solution-type" may define that the second polymer binder does not keep the particle phase by being dissolved with an electrolyte inserted in a cell. By select the sort of the second polymer binder in the described above, dry adhesive force and wet adhesive force to an electrode are improved respectively.

According to the embodiment of the present disclosure, the adhesive layer is provided on part of the coating layer(130). Specifically, the second polymer binder is provided on part of the coating layer(130). As described above, by providing the adhesive layer on part of the coating layer, dry adhesive force and wet adhesive force to an electrode are improved respectively.

According to the embodiment of the present disclosure, the adhesive layer is provided to more than 0 % or less than 100 % of area based on the total area of the coating layer. Specifically, the second polymer binder is provided to more than 0 % or less than 100 % of area based on the total area of the coating layer. Specifically, the second polymer binder is provided to 1 % and more or 99 % and less, 5 % and more or 95 % and less, 10 % and more or 90 % and less, 15 % and more or 85 % and less, 20 % and more or 80 % and less, 25 % and more or 75 % and less, 30 % and more or 70 % and less, 35 % and more or 65 % and less, 40 % and more or 60 % and less, or 45 % and more or 55 % and less of area based on the total area of the coating layer. The area provided by the second polymer binder on the coating layer is adjusted within the above-described range, dry adhesive force and wet adhesive force to an electrode are improved respectively.

According to the embodiment of the present disclosure, the second polymer binder may be provided on part of the coating layer by spray method, bar coating method, spin coating method or deep coating method. The provided method of the second polymer binder is selected as the above-described, the second polymer binder is disposed on the coating layer easily.

In an embodiment of the present disclosure, there is provided a method of preparing a separator for an electrochemical device, which includes applying a slurry for a coating layer including a first polymer binder 131 and inorganic particles 135 on at least one surface of a porous polymer substrate 110 for forming a coating layer; and applying a slurry for an adhesive layer including a second polymer binder for forming an adhesive layer.

The method of preparing an electrochemical device according to an embodiment of the present disclosure enables to easily prevent an increase in the resistance of a separator and enables to improve the energy density of a battery by preparing the separator as a thin film. Among the descriptions relating to the method of preparing a separator for an electrochemical device according to an embodiment of the present disclosure, those overlap with the method of preparing an electrochemical device will be omitted herein.

According to an embodiment of the present disclosure, the method of preparing an electrochemical device includes the step of applying a slurry for a coating layer including a first polymer binder 131 and inorganic particles 135 on at least one surface of a porous polymer substrate 110. As described above, by including the step of applying the slurry for the coating layer on at least one surface of a porous polymer substrate, it is possible to form a coating layer by a single application, improve the heat resistance of the separator due to the presence of an excessive amount of inorganic particles in the slurry for the coating layer, and easily evaporate the solvent, that is, the solvent which may be comprised in the slurry for a coating layer besides the first polymer binder 131 and the inorganic particles 135. The slurry for a coating layer may essentially comprise or consist of the first polymer binder 131, the inorganic particles 135 and a solvent.

According to an embodiment of the present disclosure, the method may be performed such that, before the step of applying the slurry for the coating layer, a first polymer binder may be dispersed in an appropriate dispersion medium so as to prepare a polymer emulsion to prepare the slurry. As the solvent, it is preferable to use a solvent which has a solubility index similar to that of the binder polymer and has a low boiling point. This is to facilitate uniform mixing and subsequent removal of the solvent. Non-limiting examples of solvents that can be used may include acetone, tetrahydrofuran, methylene chloride, chloroform, dimethylformamide, N-methyl-2-pyrrolidone (NMP), cyclohexane, water, a mixture thereof, *etc.* As used herein, the dispersion medium is the one used in the process of preparing the slurry and may mean a solvent.

According to an embodiment of the present disclosure, inorganic particles may be added to and dispersed in the polymer emulsion. The content ratio of the inorganic particles and the polymeric binder particles is as described above and can be appropriately adjusted in consideration of the thickness, pore size, and porosity of the coating layer to be finally prepared according to an exemplary embodiment of the present disclosure.

According to an embodiment of the present disclosure, the slurry for the coating layer may be dispersed by adding a first polymer binder and inorganic particles to water, which is a dispersion medium (solvent).

According to an embodiment of the present disclosure, the slurry for the coating layer may further include a dispersant. The slurry for a coating layer may essentially comprise or consist of the first polymer binder 131, the inorganic particles 135, the solvent and a dispersant. Specifically, the slurry for the coating layer may include sodium carboxymethyl cellulose (SG-L02, GL Chem Co.) as a dispersant. As described above, the slurry for the coating layer may improve the dispersibility of the slurry for the coating layer by further including a dispersant.

According to an embodiment of the present disclosure, the content of the dispersant in the slurry for the coating layer may be 0.5 parts by weight or more and 2 parts by weight or less relative to the total content of a first polymer binder, inorganic particles, and the dispersant. Within the above range, the dispersibility of the slurry for the coating layer may be improved by adjusting the content of the dispersant.

According to an embodiment of the present disclosure, in the slurry for the coating layer, the content of the inorganic particles may be 90 parts by weight or more based on 100 parts by weight of the total content of the first polymer binder, the inorganic particles, and the dispersant. The content of the inorganic particles in the slurry for the coating layer may be 90 parts by weight or more, 91 parts by weight or more, 92 parts by weight or more, 93 parts by weight or more, or 94 parts by weight or more based on 100 parts by weight of the total content of the first polymer binder, the inorganic particles, and the dispersant. The content of the inorganic particles in the slurry for the coating layer may be 100 parts by weight or less, 99 parts by weight or less, 98 parts by weight or less, 97 parts by weight or less, or 96 parts by weight or less based on 100 parts by weight of the total content of the first polymer binder, the inorganic particles, and the dispersant. Specifically, the content of the inorganic particles in the slurry for the coating layer may be 90 parts by weight or more and 100 parts by weight or less, 91 parts by weight or more and 99 parts by weight or less, 92 parts by weight or more and 98 parts by weight or less, 93 parts by weight or more and 97 parts by weight or less, or 94 parts by weight or more and 96 parts by weight or less based on 100 parts by weight of the total content of the first polymer binder, the inorganic particles, and the dispersant. It is possible to improve the heat resistance and mechanical properties of the separator by adjusting the content of the inorganic particles 133 within the above range.

According to an embodiment of the present disclosure, the content of the first polymer binder in the slurry may be 10 parts by weight or less based on 100 parts by weight of the total content of the first polymer binder, the inorganic particles, and the dispersant. The content of the first polymer binder in the slurry for the coating layer may be greater than 0 parts by weight, 1 part by weight or more, 2 parts by weight or more, 3 parts by weight or more, 4 parts by weight or more based on 100 parts by weight of the total content of the first polymer binder, the inorganic particles, and the dispersant. The content of the first polymer binder in the slurry for the coating layer may be equal to or less than 10 parts by weight, equal to or less than 9 parts by weight, equal to or less than 8 parts by weight, equal to or less than 7 parts by weight, or equal to or less than 6 parts by weight based on 100 parts by weight of the total content of the first polymer binder, the inorganic particles, and the dispersant. Specifically, the content of the first polymer binder in the slurry for the coating layer may be greater than 0 parts by weight and equal to or less than 10 parts by weight, greater than 1 part by weight and equal to or less than 9 parts by weight, greater than 2 parts by weight and equal to or less than 8 parts by weight, greater than 3 parts by weight and equal to or less than 7 parts by weight, or greater than 4 parts by weight and equal to or less than 6 parts by weight based on 100 parts by weight of the total content of the first polymer binder, the inorganic particles, and the dispersant. It is possible to improve the mechanical properties of the coating layer 130, and maintain the porosity of the coating layer, and improve heat resistance by adjusting the content of the first polymer binder 131 within the above range.

According to an embodiment of the present disclosure, the method of applying the slurry for the coating layer to the surface of the porous polymer substrate 110 is not particularly limited to any one method, and a conventional method known in the art may be used. For example, various methods such as dip coating, die coating, roll coating, comma coating, a combination thereof, *etc.* may be used.

According to an embodiment of the present disclosure, the method of preparing the electrochemical device includes the step of applying a slurry for an adhesive layer including a second polymer binder 151. As described above, the adhesive layer can easily be formed by including the step of applying a slurry for an adhesive layer including a second polymer binder, and the loading amount of the second polymer binder (the total weight of the second polymer binder and/or the third polymer binder included in the adhesive layer) can easily be adjusted.

According to an embodiment of the present disclosure, the method of applying the slurry for the adhesive layer to the surface of the porous polymer substrate 110 is not particularly limited to any one method, and a conventional method known in the art may be used. For example, various methods such as dip coating, die coating, roll coating, comma coating, a combination thereof, *etc.* may be used.

According to an embodiment of the present disclosure, the slurry for the adhesive layer may further include a solvent, and the solvent may be water. As described above, the slurry for the adhesive layer, by further including a solvent, can more uniformly disperse the second polymer binder and the third polymer binder.

The slurry for the adhesive layer may essentially comprise or consist of the second polymer binder and the solvent. The slurry for the adhesive layer may essentially comprise or consist of the second polymer binder, the third polymer binder and the solvent.

According to an embodiment of the present disclosure, the content of the second polymer binder in the slurry for the adhesive layer may be 1 part by weight or more and 99 parts by weight or less based on 100 parts by weight of the slurry for the adhesive layer. The content of the second polymer binder in the slurry for the adhesive layer may be 10 parts by weight or more, 20 parts by weight or more, 30 parts by weight or more, or 40 parts by weight or more based on 100 parts by weight of the slurry for the adhesive layer. The content of the second polymer binder in the slurry for the adhesive layer may be 90 parts by weight or less, 80 parts by weight or less, 70 parts by weight or less, or 60 parts by weight or less based on 100 parts by weight of the slurry for the adhesive layer. Specifically, the content of the second polymer binder in the slurry for the adhesive layer may be 10 parts by weight or more and 90 parts by weight or less, 20 parts by weight or more 80 parts by weight or less, 30 parts by weight or more 70 parts by weight or less, or 40 parts by weight or more and 60 parts by weight or less based on 100 parts by weight of the slurry for the adhesive layer. The viscosity of the electrolyte can be reduced by adjusting the content of the second polymer binder within the above range, through this, it is possible to reduce the resistance of the separator and improve the adhesive strength.

According to an embodiment of the present disclosure, the solid content of the slurry for the adhesive layer may be 10 wt% or more and 30 wt% or less. The solid content of the slurry for the adhesive layer may be 11 wt% or more, 12 wt% or more, 13 wt% or more, 14 wt% or more, 15 wt% or more, 16 wt% or more, 17 wt% or more, 18 wt% or more, or 19 wt% or more. The solid content of the slurry for the adhesive layer may be 29 wt% or less, 28 wt% or less, 27 wt% or less, 26 wt% or less, 25 wt% or less, 24 wt% or less, 23 wt% or less, 22 wt% or less, or 21 wt% or less. Specifically, the solid content of the slurry for the adhesive layer may be 11 wt% or more and 29 wt% or less, 12 wt% or more 28 wt% or less, 13 wt% or more 27 wt% or less, 14 wt% or more 26 wt% or less, 15 wt% or more 25 wt% or less, 16 wt% or more 24 wt% or less, 17 wt% or more 23 wt% or less, 18 wt% or more 22 wt% or less, or 19 wt% or more 21 wt% or less. The second polymer binder and the third polymer binder disposed on the coating layer can easily be applied by adjusting the solid content of the slurry for the adhesive layer within the above range, and the contents to be disposed can easily be adjusted.

According to an embodiment of the present disclosure, the method of preparing the electrochemical device may include the step of preparing a coating layer by drying the slurry for the coating layer, that is, the slurry for the coating layer after the slurry is applied to one or both surfaces of the porous polymer substrate. As described above, it is possible to minimize the damage to the coating layer and easily remove the solvent included in the slurry by including the step of drying the slurry for the coating layer to provide a coating layer.

According to an embodiment of the present disclosure, the temperature of the drying process of the coating layer may be 25°C or higher and 75°C or below. Specifically, the temperature of the drying process of the coating layer may be 30°C or higher and 70°C or below, 35°C or higher and 65°C or below, 40°C or higher and 60°C or below, or 45°C or higher and 55°C or below. It is possible to prevent denaturation of a porous polymer substrate and effectively remove the dispersion medium by adjusting the temperature of the drying process of the coating layer within the above range.

According to an embodiment of the present disclosure, the method of preparing the electrochemical device may include the step of drying the slurry for the adhesive layer to thereby provide an adhesive layer that is, the slurry for the adhesive layer after the slurry is applied on the coating layer. As described above, it is possible to minimize the damage to the adhesive layer and easily remove the solvent included in the slurry by including the step of preparing an adhesive layer by drying the slurry for the adhesive layer.

According to an embodiment of the present disclosure, the temperature of the drying process of the adhesive layer may be 25°C or higher and 75°C or below. Specifically, the temperature of the drying process of the adhesive layer may be 30°C or higher and 70°C or below, 35°C or higher and 65°C or below, 40°C or higher and 60°C or below, or 45°C or higher and 55°C or below. It is possible to prevent denaturation of a porous polymer substrate and effectively remove the solvent by adjusting the temperature of the drying process of the adhesive layer within the above range.

According to an embodiment of the present disclosure, the method of preparing the electrochemical device may include the step of forming a coating layer and an adhesive layer by drying the slurry for the coating layer and the slurry for the adhesive layer at once after applying the slurry for the adhesive layer. As described above, it is possible to easily form a coating layer and an adhesive layer by including include the step of forming a coating layer and an adhesive layer by drying the slurry for the coating layer and the slurry for the adhesive layer at once after applying the slurry for the adhesive layer in the method of preparing the electrochemical device.

According to an embodiment of the present disclosure, in the drying process, time conditions are appropriately set so as to minimize surface defects of the coating layer. For the drying, a drying auxiliary device *(e.g.,* a drying oven or hot air) may be used within an appropriate range.

According to an embodiment of the present disclosure, the separator is prepared as an electrochemical device by a lamination process in which an anode and a cathode are interposed and bonded by applying heat and/or pressure. **In** an embodiment of the present disclosure, the lamination process may be performed by a roll press device including a pair of pressure rollers. That is, interlayer bonding may be achieved by sequentially stacking an anode, a separator, and a cathode and inserting them between the pressure rollers. In particular, the lamination process may be performed by hot pressing.

In an embodiment of the present disclosure, there is provided an electrochemical device 1000, wherein the electrochemical device 1000 includes a cathode 300; an anode 500; a separation 100; and an electrolyte, wherein the separation 100 is interposed between the cathode 300 and the anode 500, and the separator 100 is the separator for an electrochemical device 100 according to the present invention.

The electrochemical device according to an embodiment of the present disclosure can realize the viscosity of the electrolyte by adjusting the solubility of the polymer binder included in an adhesive layer for the electrolyte, can realize the surface resistance of the battery at a low level while simultaneously improving the ionic conductivity of the battery.

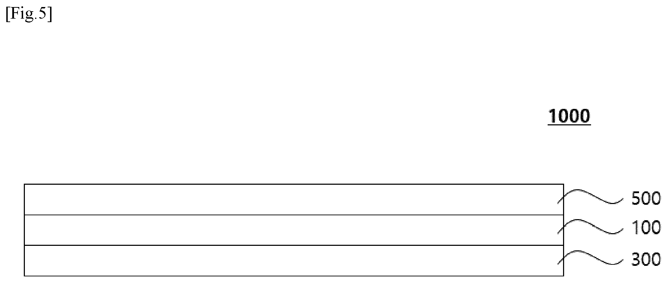

Fig. 5 is a schematic diagram of an electrochemical device 1000 according to an exemplary embodiment of the present disclosure. Referring to FIG. 5, the electrochemical device 1000 according to an exemplary embodiment of the present disclosure will be described in detail.

In an embodiment of the present disclosure, the electrochemical device is a device that converts chemical energy into electrical energy by an electrochemical energy, and it is a concept that encompasses both primary and secondary batteries. As used herein, the secondary battery is capable of charging and discharging, and refers to a lithium secondary battery, a nickel-cadmium battery, a nickel-hydrogen battery, *etc.* The lithium secondary battery uses lithium ions as an ion conductor, and examples of the lithium secondary battery may include a non-aqueous electrolyte secondary battery including liquid electrolyte, an all-solid battery including solid electrolyte, a lithium polymer battery including gel polymer electrolyte, a lithium metal battery using a lithium metal as an anode, *etc.,* but is not limited thereto.

According to an embodiment of the present disclosure, the cathode is provided with a cathode current collector and a cathode active material layer, which includes a cathode active material, a conductive material, and a binder resin on at least one surface of the current collector. The cathode active material may include one or a mixture of two or more among a layered compound *(e.g.,* lithium manganese composite oxide ($LiMn_2O_4$, $LiMnO_2$, *etc.*), lithium cobalt oxide ($LiCoO_2$), lithium nickel oxide ($LiNiO_2$, *etc.*) or a compound substituted with one or more transition metals; lithium manganese oxide *(e.g.,* Chemical Formula $Li_{1+x}Mn_{2-x}O_4$ (wherein x is 0 to 0.33), $LiMnO_3$, $LiMn_2O_3$, $LiMnO_2$, *etc.*)*;* lithium copper oxide *(e.g.,* $Li_2CuO_2$); vanadium oxide *(e.g.,* $LiV_3O_8$, $LiV_3O_4$, $V_2O_5$, $Cu_2V_2O_7$, *etc.*)*;* Ni site-type lithium nickel oxide represented by Chemical Formula $LiNi_{1-x}M_xO_2$ (wherein M is Co, Mn, Al, Cu, Fe, Mg, B, or Ga, and x is 0.01 to 0.3); lithium manganese composite oxide represented by Chemical Formula $LiMn_{1-x}M_xO_2$ (wherein M is Co, Ni, Fe, Cr, Zn, or Ta, and x is 0.01 to 0.1) or $Li_2Mn_3MO_8$ (wherein M is Fe, Co, Ni, Cu, or Zn); $LiMn_2O_4$ in which the Li part of the Chemical Formula is replaced with alkaline earth metal ions; disulfide compounds; and $Fe2(MoO_4)_3$.

According to an embodiment of the present disclosure, the anode is provided with an anode collector and an anode active material layer, which includes an anode active material, a conductive material, and a polymer binder on at least one surface of the collector. The anode may include, as an anode active material, one or a mixture of two or more from among carbon such as non-graphitizing carbon and graphite-based carbon (*e.g.*, non-graphitizing carbon, graphite-based carbon, *etc.*); metal composite oxides (*e.g.*, $LixFe_2O_3$ ($0 \leq x \leq 1$), $Li_xWO_2$ ($0 \leq x \leq 1$), $SnxMe1-xMe'_yO_z$ (Me: Mn, Fe, Pb, Ge; Me': Al, B, P, Si, elements in Groups I, II, and III of the periodic table, halogens; $0 < x \leq 1$; $1 \leq y \leq 3$; $1 \leq z \leq 8$), *etc.*); lithium metals; lithium alloys; silicon-based alloys; tin-based alloys; metal oxides (*e.g.*, SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, *etc.*); conductive polymers (*e.g.*, polyacetylene, *etc.*); Li-Co-Ni based materials; and titanium oxides.

According to an embodiment of the present disclosure, the conductive material may be, for example, any one or a mixture of two or more kinds of conductive materials selected from the group consisting of graphite, carbon black, carbon fibers or metal fibers, metal powders, conductive whiskers, conductive metal oxides, activated carbon, and polyphenylene derivatives. In the carbon nanotube, the graphite sheet has a cylindrical shape with a nano-sized diameter and an $sp^2$ bonding structure, and exhibits the characteristics of a conductor or semiconductor depending on the angle and structure at which the graphite plane is rolled. More specifically, carbon nanotubes may be a mixture of one or two or more kinds of conductive materials selected from the group consisting of natural graphite, artificial graphite, super-p, acetylene black, ketjen black, channel black, furnace black, lamp black, summer black, denka black, aluminum powder, nickel powder, zinc oxide, potassium titanate, and titanium oxide.

According to an embodiment of the present disclosure, the current collector is not particularly limited as long as it has high conductivity without causing chemical changes in the electrochemical device, and for example, stainless steel, copper, aluminum, nickel, titanium, calcined carbon, or aluminum, or stainless steel whose surface is treated with carbon, nickel, titanium, silver, *etc.* may be used.

According to an embodiment of the present disclosure, as the polymer binder resin, polymers commonly used in electrodes in the art may be used. Non-limiting examples of such binder resin may include polyvinylidene fluoride-co-hexafluoropropylene, polyvinylidene fluoride-cotrichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetatepropionate, cyanoethylpullulan, cyanoethylpolyvinylalcohol, cyanoethylcellulose, cyanoethylsucrose, pullulan, carboxyl methyl cellulose, *etc.*, but are not limited thereto.

As used herein, a cathode slurry for preparing the cathode active material layer may include a dispersant, and the dispersing agent may be a pyrrolidone-based compound. Specifically, it may be N-methylpyrrolidone (ADC-01, LG Chem).

According to an embodiment of the present disclosure, the content of the dispersant included in the cathode slurry may be greater than 0 parts by weight and equal to or less than 0.5 parts by weight based on 100 parts by weight of the cathode slurry. Specifically, the content of the dispersant included in the cathode slurry may be greater than 005 parts by weight and equal to or less than 0.4 parts by weight based on 100 parts by weight of the cathode slurry.

According to an embodiment of the present disclosure, an anode slurry for preparing the anode active material layer may include a dispersant, and the dispersant may be a polypyrrolidone-based compound. Specifically, the dispersant may be polyvinylpyrrolidone (Junsei Co., Ltd., Japan).

According to an embodiment of the present disclosure, the content of the dispersant included in the anode slurry may be greater than 0 parts by weight and equal to or less than 0.5 parts by weight based on 100 parts by weight of the anode slurry. Specifically, the content of the dispersant included in the anode slurry may be greater than 0.05 parts by weight and equal to or less than 0.4 parts by weight based on 100 parts by weight of the anode slurry.

According to an embodiment of the present disclosure, the electrochemical device prepared as described above can be charged into an appropriate case and a battery can be manufactured by injecting an electrolyte.

According to an embodiment of the present disclosure, the electrolyte is a salt having a structure of A+B-, in which A+ includes an alkali metal cation (*e.g.*, Li+, Na+, and K+) or an ion composed of a combination thereof, B- is an anion (*e.g.*, $PF6-$, $BF4-$, Cl-, Br-, I-, $ClO_4-$, $AsF_6-$, $CH_3CO_2-$, which is dissolved or dissociated in propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma ($\gamma$) butyrolactone or an organic solvent consisting of a mixture thereof, but it not limited thereto.

According to an embodiment of the present disclosure, the solubility of the second polymer binder for the electrolyte at room temperature (25°C) may be 50 (w/w)% or more and 80 (w/w)% or less. The solubility of the second polymer binder for the electrolyte is defined as the amount of the second polymer binder dissolved by 100g of electrolyte at room temperature (solute = second polymer binder and solvent = electrolyte). The solubility of the second polymer binder for the electrolyte at room temperature may be 51 (w/w)% or more, 52 (w/w)% or more, 53 (w/w)% or more, 54 (w/w)% or more, 55 (w/w)% or more, 56 (w/w)% or more, 57 (w/w)% or more, 58 (w/w)% or more, 59 (w/w)% or more, 60 (w/w)% or more, 61 (w/w)% or more, 62 (w/w)% or more, 63 (w/w)% or more, or 64 (w/w)% or more. The solubility of the second polymer binder for the electrolyte at room temperature may be 79 (w/w)% or less, 78 (w/w)% or less, 77 (w/w)% or less, 76 (w/w)% or less, 75 (w/w)% or less, 74 (w/w)% or less, 73 (w/w)% or less, 72 (w/w)% or less, 71 (w/w)% or less, 70 (w/w)% or less, 69 (w/w)% or less, 68 (w/w)% or less, 67 (w/w)% or less, or 66 (w/w)% or less. Specifically, the solubility of the second polymer binder for the electrolyte at room temperature may be 51 (w/w)% or more and 79 (w/w)% or less, 52 (w/w)% or more and 78 (w/w)% or less, 53 (w/w)% or more and 77 (w/w)% or less, 54 (w/w)% or more and 76 (w/w)% or less, 55 (w/w)% or more and 75 (w/w)% or less, 56 (w/w)% or more and 74 (w/w)% or less, 57 (w/w)% or more and 73 (w/w)% or less, 58 (w/w)% or more and 72 (w/w)% or less, 59 (w/w)% or more and 71 (w/w)% or less, 60 (w/w)% or more and 70 (w/w)% or less, 61 (w/w)% or more and 69 (w/w)% or less, 62 (w/w)% or more and 68 (w/w)% or less, 63 (w/w)% or more and 67 (w/w)% or less, or 64 (w/w)% or more and 66 (w/w)% or less. It is possible to prevent an increase in the viscosity of the electrolyte due to the dissolution of the second polymer in the electrolyte, and to improve resistance and ionic conductivity of the separator by adjusting the solubility of the second polymer binder for the electrolyte within the above range.

According to an embodiment of the present disclosure, the solubility of the third polymer binder for the electrolyte at room temperature (25°C) may be 50 (w/w)% or more and 80 (w/w)% or less. The solubility of the third polymer binder for the electrolyte at room temperature may be 51 (w/w)% or more, 52 (w/w)% or more, 53 (w/w)% or more, 54 (w/w)% or more, 55 (w/w)% or more, 56 (w/w)% or more, 57 (w/w)% or more, 58 (w/w)% or more, 59 (w/w)% or more, 60 (w/w)% or more, 61 (w/w)% or more, 62 (w/w)% or more, 63 (w/w)% or more, 64 (w/w)% or more. The solubility of the third polymer binder for the electrolyte at room temperature may be 79 (w/w)% or less, 78 (w/w)% or less, 77 (w/w)% or less, 76 (w/w)% or less, 75 (w/w)% or less, 74 (w/w)% or less, 73 (w/w)% or less, 72 (w/w)% or less, 71 (w/w)% or less, 70 (w/w)% or less, 69 (w/w)% or less, 68 (w/w)% or less, 67 (w/w)% or less, or 66 (w/w)% or less. Specifically, the solubility of the third polymer binder for the electrolyte at room temperature may be 51 (w/w)% or more and 79 (w/w)% or less, 52 (w/w)% or more and 78 (w/w)% or less, 53 (w/w)% or more and 77 (w/w)% or less, 54 (w/w)% or more and 76 (w/w)% or less, 55 (w/w)% or more and 75 (w/w)% or less, 56 (w/w)% or more and 74 (w/w)% or less, 57 (w/w)% or more and 73 (w/w)% or less, 58 (w/w)% or more and 72 (w/w)% or less, 59 (w/w)% or more and 71 (w/w)% or less, 60 (w/w)% or more and 70 (w/w)% or less, 61 (w/w)% or more and 69 (w/w)% or less, 62 (w/w)% or more and 68 (w/w)% or less, 63 (w/w)% or more and 67 (w/w)% or less, 64 (w/w)% or more and 66 (w/w)% or less. It is possible to prevent an increase in the viscosity of the electrolyte due to the dissolution of the third polymer in the electrolyte, and to improve resistance and ionic conductivity of the separator by adjusting the solubility of the third polymer binder for the electrolyte within the above range.

In an embodiment of the present disclosure, there is provided a device which includes a battery including the electrode assembly as a unit cell, a battery pack including the battery module, and a device including the battery pack as a power source. Specific examples of the device may include a power tool powered by an electric motor; electric vehicles (EVs) including electric vehicles (EVs), hybrid electric vehicles (HEVs), plug-in hybrid electric vehicles (PHEVs), *etc*.; electric two-wheeled vehicles including electric bicycles (E-bikes) and electric scooters (E-scooters); electric golf carts; power storage systems, *etc.,* but is not limited thereto.

Hereinafter, an embodiment will be described in detail to explain the present disclosure in detail. However, embodiments according to the present disclosure may be modified in various forms, and the scope of the present disclosure should not be construed as being limited to the embodiments detailed below. Embodiments of the present disclosure are provided to more completely explain the present disclosure to those with average knowledge in the art.

**<Example 1>**

Polyethylene resin (weight average molecular weight: 900,000) was extruded, and a porous polymer substrate (total thickness: about 9 $\mu$m, porosity: 40 vol%) was prepared by a wet method.

As inorganic particles, $Al_2O_3$ powder having a $D_{50}$ particle size of 600 nm was prepared. An acrylic emulsion (CSB-130, Toyo Ink Co.) was prepared as the first binder polymer, and sodium carboxymethyl cellulose (CMC-Na) (SG-L02, GL Chem Co.) was prepared as a dispersant.

After adding the prepared inorganic particles, the first binder polymer, and the dispersant to water as a dispersion medium at a weight ratio of 97:2:1, the inorganic particles were crushed and dispersed to prepare a slurry for a coating layer.

Both surfaces of the porous polymer substrate were coated with the slurry for a coating layer and dried to form a coating layer, respectively.

As a second polymer binder, polyvinyl acetate in the form of particles with an average diameter ($D_{50}$) of 500 nm was added to water as a solvent and dispersed so that the solid content became 20 wt% to prepare a slurry for an adhesive layer.

A separator for an electrochemical device was manufactured by applying the slurry for an adhesive layer to the coating layer by bar coating such that the loading amount of polyvinyl acetate became 1.0 g/m$^2$, and then dried to form an adhesive layer.

**<Example 2>**

A separator for an electrochemical device was manufactured in the same manner as in Example 1 above except that the slurry for an adhesive layer was coated by bar coating such that the loading amount of polyvinyl acetate became 0.5 g/m$^2$, and then dried to form an adhesive layer in Example 1 above.

**<Example 3>**

A separator for an electrochemical device was manufactured in the same manner as in Example 1 above except that the slurry for an adhesive layer was coated by spray coating such that the loading amount of polyvinyl acetate became 0.2 g/m$^2$, and then dried to form an adhesive layer in Example 1 above.

**<Example 4>**

A separator for an electrochemical device was manufactured in the same manner as in Example 1 above except that polyvinyl acetate (PVAc) (*i.e.,* a second polymer binder) and a copolymer of polyvinylidene fluoride (PVdF) and hexafluoropropylene (HFP) (BG4430 of Arkema company) (*i.e.,* a third polymer binder) were mixed in a weight ratio of 70:30 and added to water (*i.e.,* a solvent) to prepare a slurry for the adhesive layer, and the slurry for the adhesive layer was coated by bar coating such that the loading amount of the sum of the polyvinyl acetate (PVAc) and the copolymer of polyvinylidene fluoride and hexafluoropropylene (PVdF-HFP) became 0.5 g/m$^2$, and then dried to form an adhesive layer in Example 1 above.

**<Example 5>**

A separator for an electrochemical device was manufactured in the same manner as in Example 1 above except that the adhesive layer is formed such that the second polymer binder is provided to 50 % of area based the total area of the coating layer in Example 1 above.

**<Comparative Example 1>**

Polyethylene resin (weight average molecular weight of 900,000) was extruded, and a porous polymer substrate (total thickness of about 9 μm) was prepared by a wet method.

A copolymer of polyvinylidene fluoride and hexafluoropropylene (PVdF-HFP) (Solef21510, Solvay Co.) was prepared as the binder polymer, and sodium carboxymethyl cellulose (CMC-Na) (SG-L02, GL Chem Co.) was prepared as a dispersant.

After adding the prepared inorganic particles, binder polymer, and dispersant to acetone in a weight ratio of 78:20:2, a slurry for a coating layer was prepared by dissolving the polymer binder.

A separator for an electrochemical device was manufactured by applying the slurry for a coating layer to both sides of the porous polymer substrate such that the loading amount became 3.2 g/m$^2$, and then forming a coating layer using a humidified phase separation method.

**<Comparative Example 2>**

A separator for an electrochemical device was manufactured in the same manner as in Example 1 above except that acrylate (ADS11, LGC Co.) (*i.e.,* an acrylic resin) was used as a second polymer binder in Example 1 above.

**<Comparative Example 3>**

A separator for an electrochemical device was manufactured in the same manner as in Example 1 above except that only a copolymer of polyvinylidene fluoride and hexafluoropropylene (PVdF-HFP) (LBG4430LX, Arkema Co.) was used as a second polymer binder in Example 1 above.

**<Comparative Example 4>**

A separator for an electrochemical device was manufactured in the same manner as in Example 1 above except that as a second polymer binder, a mixture in which acrylate (ADS11, LGC Co.) (*i.e.,* an acrylic resin) and a copolymer of polyvinylidene fluoride and hexafluoropropylene (PVdF-HFP) (LBG4430LX, Arkema Co.) were mixed in a weight ratio of 5:5 was used in Example 1 above.

**<Comparative Example 5>**

A separator for an electrochemical device was manufactured in the same manner as in Example 1 above except that a polyolefin wax (Chemipal W700, Mitsui Chemicals, Co., Ltd.) was used as a second polymer binder in Example 1 above.

**<Comparative Example 6>**

A separator for an electrochemical device was manufactured in the same manner as in Example 1 above except that the slurry for an adhesive layer was coated by bar coating such that the loading amount of polyvinyl acetate became 1.5 $g/m^2$, and then dried to form an adhesive layer in Example 1 above.

**<Manufacture of electrochemical device >**

1) Preparation of cathode

A cathode active material ($LiNi_{0.8}Mn_{0.1}Co_{0.1}O_2$), a conductive material (carbon black), a dispersant (*N*-methylpyrrolidone, ADC-01, LG Chem), and a binder resin (PVDF-HFP and PVDF mixed) were mixed in a weight ratio of 97.5:0.7:0.14:1.66 with water, and thereby a slurry for a cathode active material layer having a concentration of 50 wt% of the remaining components except water was prepared. Then, the slurry was applied to the surface of an aluminum thin film (thickness of 10 $\mu$m) and dried to prepare a cathode having a cathode active material layer (thickness of 120 $\mu$m).

2) Preparation of anode

Graphite (a blend of natural graphite and artificial graphite), a conductive material (carbon black), a dispersant (polyvinylpyrrolidone, Junsei Co., Japan), and a binder resin (a mixture of PVDF-HFP and PVDF) were mixed with water in a weight ratio of 97.5:0.7:0.14:1.66, and thereby a slurry for an anode active material layer having a concentration of 50 wt% of the remaining components except water was prepared. Then, the slurry was applied to the surface of a copper thin film (10 $\mu$m in thickness) and dried to prepare an anode having an anode active material layer (120 $\mu$m in thickness).

3) Lamination process

An electrode assembly was obtained by laminating the prepared anode and cathode with the separators of Example and Comparative Examples interposed therebetween and performing a lamination process. The lamination process was performed using a hot press under 70°C and 5.2 MPa conditions for 10 seconds.

**<Experimental Example 1: Measurement of heat shrinkage rate at 180 °C >**

Specimens were prepared by cutting each of the separators of Examples 1 to 5 and Comparative Examples 1 to 5 into a size of 50 mm (length) × 50 mm (width), maintained in an oven heated to 180°C for 30 minutes, and then the specimens were recovered and the changes in length in the machine direction (MD) and the transverse direction (TD) were measured and the heat shrinkage rate was calculated by Equation 1 below and the results are summarized in Table 1 below.

heat shrinkage rate at 180°C (%) = {(the value before shrinking - the value after shrinking)/the value before shrinking} × 100                    [Equation 1]

**<Experimental Example 2: Measurement of dry adhesive strength >**

Specimens were prepared by cutting each of the separators of Examples 1 to 5 and Comparative Examples 1 to 5 into a size of 70 mm (length) × 25 mm (width), and laminating the prepared anode and the separator using a press under 60°C and 6.5 MPa conditions for 1 sec. The prepared specimend were fixed by attaching to a glass plate using double-sided tape, and in particular, an anode was placed to face the glass plate. The separator portion of each specimen was peeled at an angle of 180° at a speed of 150 mm/min at 25°C, and the strength at this time was measured and the results are summarized in Table 1 below.

**<Experimental Example 3: Measurement of wet adhesive strength>**

Specimens were prepared by cutting each of the separators of Examples 1 to 5 and Comparative Examples 1 to 5 into a size of 70 mm (length) × 25 mm (width), and laminating the prepared anode and the separator using a press under 60°C and 6.5 MPa conditions for 1 sec. The prepared specimens were each loaded into a battery case with electrolyte and maintained therein for 4 hours to impregnate the specimen with electrolyte. As the electrolyte, a mixture of ethylene carbonate and ethylmethyl carbonate in a volume ratio of 7:3 and LiPF$_6$ prepared at a concentration of 1 M was used. Then, the specimens were each taken out of the case and fixed by attaching it to the glass plate using double-sided tape. In particular, the anode was placed to face the glass plate. The separator portion of each specimen was peeled at an angle of 90° at a speed of 200 mm/min at 25°C, and the strength at this time was measured and the results are summarized in Table 1 below.

**<Experimental Example 4: Measurement of viscosity of electrolyte>**

In the electrode assembly including the separators of Examples 1 to 5 and Comparative Examples 1 to 5, the viscosity of the electrolyte was measured at 25°C using the Brookfield's LV DV-II + Pro Viscometer (cone-plate type, 90% of torque, spindle # 42, sample loading amount: 1 mL) and the results are summarized in Table 1 below.

**<Experimental Example 5: Measurement of ion conductivity>**

In the electrode assemblies including the separators of Examples 1 to 5 and Comparative Examples 1 to 5, the ionic conductivity of the electrolyte was measured at 25°C using Mettler Toledo's Multiparameter and the results are summarized in Table 1 below.

**<Experimental Example 6: Measurement of resistance of separator>**

As for the resistance, each separator was interposed between SUS, and electrolyte was injected to make a coin cell, and the resistance (ER) was measured by the EIS method and the results are summarized in Table 1 below. In particular, the frequency was set to be in the range of 10,000 Hz to 100,000 Hz. The electrolyte is a mixture in which LiPF$_6$ was mixed to a concentration of 1 M in a non-aqueous solvent in which ethylene carbonate and ethyl methyl carbonate were mixed in a 3:7 ratio.

**< Experimental Example 7: Measurement of cycle capacity retention rate at room temperature>**

The electrochemical devices using the separators of Examples 1 to 5 and Comparative Examples 1 to 5 were charged/discharged once at 0.1 C in a voltage range of 3.0 V to 4.4 V in a 25 ° C chamber using an electrochemical charger and discharger, their life characteristics were measured 200 times while proceeding with charging at 1.0 C and discharging at 1.0 C. In particular, the ratio of the discharge capacity after 200 cycles to the discharge capacity after one cycle was expressed as a capacity retention rate by the calculation using Equation 2 below, and the results of the life characteristics are summarized in Table 1 below.
The capacity retention rate was calculated by Equation 2 below.

capacity retention rate (%) = (discharge capacity after 200 cycles/discharge capacity after one cycle) × 100     [Equation 2]

[Table 1]

| | Heat Shrinkage Rate at 180°C (MD/TD) (%) | Dry Adhesive Strength (gf/20mm) | Wet Adhesive Strength (gf/20mm) | Viscosity of Electrolyte (cp) | Ion Conductivity (mS/cm) | Resistance of Separator (Ω) | Cycle Capacity Retention Rate at Room Temperature (%) |
|---|---|---|---|---|---|---|---|
| Example 1 | 2/2 | 72 | 6 | 6.30 | 7.62 | 0.72 | 80 |
| Example 2 | 2/1 | 65 | 3 | 4.70 | 7.81 | 0.61 | 82 |
| Example 3 | 1/1 | 52 | 2 | 4.07 | 8.01 | 0.53 | 93 |

(continued)

| | Heat Shrinkage Rate at 180°C (MD/TD) (%) | Dry Adhesive Strength (gf/20mm) | Wet Adhesive Strength (gf/20mm) | Viscosity of Electrolyte (cp) | Ion Conductivity (mS/cm) | Resistance of Separator (Ω) | Cycle Capacity Retention Rate at Room Temperature (%) |
|---|---|---|---|---|---|---|---|
| Example 4 | 1/1 | 46 | 13 | 4.14 | 8.07 | 0.58 | 90 |
| Example 5 | 2/2 | 55 | 4 | 4.05 | 7.93 | 0.75 | 81 |
| Comparative Example 1 | 70/60 | 81 | 21 | 8.06 | 7.25 | 0.85 | 72 |
| Comparative Example 2 | 2/2 | 41 | 9 | 4.02 | 8.12 | 1.10 | 71 |
| Comparative Example 3 | 2/2 | 21 | 16 | 4.11 | 8.08 | 0.86 | 75 |
| Comparative Example 4 | 2/2 | 37 | 15 | 2.07 | 8.11 | 1.05 | 76 |
| Comparative Example 5 | 2/2 | 14 | - | 4.12 | 8.20 | 0.92 | 84 |
| Comparative Example 6 | 3/2 | 117 | 7 | 8.20 | 7.32 | 1.01 | 66 |

1 cPoise corresponds to 0.001 Pa*s and 1 gf/20mm corresponds to 0.4903 N/m. Referring to Table 1, it was confirmed that in the separators of Examples 1 to 4, which include a polyvinyl acetate-based resin in an adhesive layer, and the content of the second polymer binder per area of the adhesive layer is greater than 0 g/m$^2$ and equal to or less than 1.2 g/m$^2$, the resistance of the separator was implemented as 0.75 Ω or less, and the capacity retention rates at room temperature cycle were all 80% or higher.

In contrast, in the separator of Comparative Example 1, which is a separator using a humidified phase separation method without a separate adhesive layer, the heat shrinkage rate was high, whereas in the separator of Comparative Example 2, which includes only acrylic resin in the adhesive layer, the separator of Comparative Example 3, which includes only a copolymer of polyvinylidene fluoride and hexafluoropropylene, and the separator of Comparative Example 4, which includes acrylic resin and a copolymer of polyvinylidene fluoride and hexafluoropropylene together, the resistance of the separator was increased while the capacity retention rates at room temperature cycle was decreased.

Furthermore, in the separator of Comparative Example 5 including polyolefin wax in an adhesive layer, both dry adhesive strength and wet adhesive strength were reduced, whereas in the separator of Comparative Example 6 including an excess amount of a polyvinyl acetate-based resin, the resistance of the separator was increased while the capacity retention rate at room temperature cycle was decreased.

Ultimately, the separator for an electrochemical device according to an embodiment of the present disclosure is characterized in that it includes a polyvinyl acetate-based resin in the adhesive layer, and can improve battery performance by reducing membrane resistance and increase the capacity retention rate at room temperature cycle by adjusting the content of the polyvinyl acetate-based resin.

[Code Explanation]

100: separator for electrochemical device

110: porous polymer substrate

130: coating layer

131: first polymer binder

133: inorganic particles

150: adhesive layer

151: second polymer binder

300: cathode

500: anode

1000: electrochemical device

**Claims**

1.  A separator for an electrochemical device (100), comprising:

    a porous polymer substrate (110);
    a coating layer (130), wherein the coating layer (130) is provided on at least one surface of the porous polymer substrate (110); and the coating layer (130) comprises a first polymer binder (131) and inorganic particles (133); and
    an adhesive layer (150), wherein the adhesive layer (150) is provided on the coating layer (130); and the adhesive layer (150) comprises a second polymer binder(151), wherein the second polymer binder (151) comprises a polyvinyl acetate-based resin;
    wherein an amount of the second polymer binder (151) per area of the adhesive layer (150) is greater than 0 $g/m^2$ and less than 1.5 $g/m^2$;
    the second polymer binder (151) is in particulate form;
    the adhesive layer (150) further comprises a third polymer binder (153), wherein the third polymer binder (153) comprises a polyvinylidene-based binder; and
    the polyvinylidene-based binder is a copolymer of polyvinylidene fluoride and hexafluoropropylene.

2.  The separator for an electrochemical device (100) according to claim 1, wherein the amount of the second polymer binder (151) per area of the adhesive layer (150) is from 0.1 $g/m^2$ to 1.4 $g/m^2$.

3.  The separator for an electrochemical device (100) according to claim 1 or 2, wherein the content of the inorganic particles (133) in the coating layer (130) is 90 parts by weight or more with respect to 100 parts by weight of the coating layer (130).

4.  The separator for an electrochemical device (100) according to claim 1, wherein a weight ratio of the second polymer binder (151) to the third polymer binder (153) in the adhesive layer (150) is from 99:1 to 50:50.

5.  The separator for an electrochemical device (100) according to any of the preceding claims, wherein the thickness of the coating layer (130) is greater than 0 and 2.0 $\mu$m or less.

6.  The separator for an electrochemical device (100) according to any of the preceding claims, wherein the resistance of the separator is 0.8 $\Omega$ or less measured as set forth in the description.

7.  An electrochemical device (1000) comprising a cathode (300), an anode (500), a separator (100), and an electrolyte, wherein the separator is interposed between the cathode (300) and the anode (500); and the separator (100) is the separator (100) for an electrochemical device (100) according to any one of preceding claims.

**Patentansprüche**

1.  Separator für eine elektrochemische Vorrichtung (100), umfassend:

    ein poröses Polymersubstrat (110);
    eine Beschichtungsschicht (130), wobei die Beschichtungsschicht (130) auf mindestens einer Oberfläche des porösen Polymersubstrats (110) bereitgestellt ist; und die Beschichtungsschicht (130) ein erstes Polymerbindemittel (131) und anorganische Partikel (133) umfasst; und

eine Klebstoffschicht (150), wobei die Klebstoffschicht (150) auf der Beschichtungsschicht (130) bereitgestellt ist; und die Klebstoffschicht (150) ein zweites Polymerbindemittel (151) umfasst, wobei das zweite Polymerbindemittel (151) ein Harz auf Polyvinylacetatbasis umfasst;

wobei eine Menge des zweiten Polymerbindemittels (151) pro Fläche der Klebstoffschicht (150) größer als 0 g/m$^2$ und kleiner als 1,5 g/m$^2$ ist;

das zweite Polymerbindemittel (151) in Partikelform vorliegt;

die Klebstoffschicht (150) ferner ein drittes Polymerbindemittel (153) umfasst, wobei das dritte Polymerbindemittel (153) ein Bindemittel auf Polyvinylidenbasis umfasst; und

das Bindemittel auf Polyvinylidenbasis ein Copolymer aus Polyvinylidenfluorid und Hexafluorpropylen ist.

2. Separator für eine elektrochemische Vorrichtung (100) nach Anspruch 1, wobei die Menge des zweiten Polymerbindemittels (151) pro Fläche der Klebstoffschicht (150) von 0,1 g/m$^2$ bis 1,4 g/m$^2$ beträgt.

3. Separator für eine elektrochemische Vorrichtung (100) nach Anspruch 1 oder 2, wobei der Gehalt der anorganischen Partikel (133) in der Beschichtungsschicht (130) 90 Gewichtsteile oder mehr in Bezug auf 100 Gewichtsteile der Beschichtungsschicht (130) beträgt.

4. Separator für eine elektrochemische Vorrichtung (100) nach Anspruch 1, wobei ein Gewichtsverhältnis des zweiten Polymerbindemittels (151) zu dem dritten Polymerbindemittel (153) in der Klebstoffschicht (150) von 99:1 bis 50:50 beträgt.

5. Separator für eine elektrochemische Vorrichtung (100) nach einem der vorhergehenden Ansprüche, wobei die Dicke der Beschichtungsschicht (130) größer als 0 und 2,0 $\mu$m oder weniger ist.

6. Separator für eine elektrochemische Vorrichtung (100) nach einem der vorhergehenden Ansprüche, wobei der Widerstand des Separators 0,8 $\Omega$ oder weniger beträgt, gemessen wie in der Beschreibung dargelegt.

7. Elektrochemische Vorrichtung (1000), umfassend eine Kathode (300), eine Anode (500), einen Separator (100) und einen Elektrolyten, wobei der Separator zwischen der Kathode (300) und der Anode (500) angeordnet ist; und der Separator (100) der Separator (100) für eine elektrochemische Vorrichtung (100) nach einem der vorhergehenden Ansprüche ist.

**Revendications**

1. Séparateur (100) pour dispositif électrochimique, comprenant :

un substrat polymère poreux (110) ;

une couche de revêtement (130), où la couche de revêtement (130) est fournie sur au moins une surface du substrat polymère poreux (110) ; et où la couche de revêtement (130) comprend un premier liant polymère (131) et des particules inorganiques (133) ; et

une couche adhésive (150), où la couche adhésive (150) est fournie sur la couche de revêtement (130) ; et où la couche adhésive (150) comprend un deuxième liant polymère (151), le deuxième liant polymère (151) comprenant une résine à base de polyacétate de vinyle ;

où une quantité du deuxième liant polymère (151) par unité de surface de la couche adhésive (150) est supérieure à 0 g/m$^2$ et inférieure à 1,5 g/m$^2$ ;

le deuxième liant polymère (151) est sous une forme particulaire ;

la couche adhésive (150) comprend en outre un troisième liant polymère (153), où le troisième liant polymère (153) comprend un liant à base de polyvinylidène ; et

le liant à base de polyvinylidène est un copolymère de polyfluorure de vinylidène-co-hexafluoropropylène.

2. Séparateur (100) pour dispositif électrochimique selon la revendication 1, où la quantité du deuxième liant polymère (151) par unité de surface de la couche adhésive (150) va de 0,1 g/m$^2$ à 1,4 g/m$^2$.

3. Séparateur (100) pour dispositif électrochimique selon la revendication 1 ou 2, où la teneur en particules inorganiques (133) de la couche de revêtement (130) est égale ou supérieure à 90 parties en poids pour 100 parties en poids de la couche de revêtement (130).

4. Séparateur (100) pour dispositif électrochimique selon la revendication 1, où un rapport entre les poids du deuxième liant polymère (151) et du troisième liant polymère (153) dans la couche adhésive (150) va de 99 : 1 à 50 : 50.

5. Séparateur (100) pour dispositif électrochimique selon l'une quelconque des revendications précédentes, où l'épaisseur de la couche de revêtement (130) est supérieure à 0 et inférieure à 2,0 µm.

6. Séparateur (100) pour dispositif électrochimique selon l'une quelconque des revendications précédentes, où la résistance du séparateur, mesurée comme stipulé dans la description, est inférieure ou égale à 0,8 Ω.

7. Dispositif électrochimique (1000) comprenant une cathode (300), une anode (500), un séparateur (100) et un électrolyte, où le séparateur est interposé entre la cathode (300) et l'anode (500) ; le séparateur (100) étant le séparateur (100) pour dispositif électrochimique selon l'une quelconque des revendications précédentes.

[Fig.1]

[Fig.2]

[Fig.3]

[Fig.4]

[Fig.5]

1000

500
100
300

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230026495
- KR 1020240007842
- US 2018315971 A1
- WO 2022045858 A1